# EUROPEAN PATENT SPECIFICATION

(11) **EP 4 607 071 B1**
(45) Date of publication and mention of the grant of the patent: **09.12.2026**
(21) Application number: 24461534.0
(22) Date of filing: 23.02.2024
(51) Int. Cl.: F16K 27/06, F16K 49/00

(54) **VALVE HEATING ARRANGEMENT**
VENTILHEIZANORDNUNG
DISPOSITIF DE CHAUFFAGE DE SOUPAPE

(43) Date of publication of application: 27.08.2025
(73) Proprietor: Goodrich Corporation, Charlotte, NC 28217 (US)
(72) Inventor: KROCZEK, Piotr Jacek, 51-317 Wroclaw (PL); TUREK, Lukasz, 51-317 Wroclaw (PL)
(74) Representative: Dehns

(56) References cited:
- AT-U1- 12 957
- CN-U- 216 479 258

## Description

### TECHNICAL FIELD

The present disclosure is concerned with providing heating for valves and valve components e.g. to prevent freezing.

### BACKGROUND

Valves of many types are known to regulate the flow of fluid through a system. Such valves can be manual or motorized. Mechanical, hydraulic and electrical valves are known and used in many fields. Often, such valves and associated pipes are required to operate in extreme environments and are required to be able to continue to operate reliably in environments where e.g. contamination, vibration, pressure and or temperatures can impact operation. One field of application where the valve components are subjected to particularly low temperatures is in the aerospace field. Valves are used to drain fluid from water systems in the aircraft or to drain water that has accumulated in parts of the aircraft such as the fuel tank. Hydraulic valves are also used to control moveable parts of the aircraft such as flight control panels. Components such as water pipes and valves designed for aerospace applications often face many unique challenges. One of the main challenges is high altitude operation with ambient temperatures around -45°C (-50°F). At such temperatures, water in or around the valve parts can freeze and prevent reliable operation of the valve. For this reason, many valves require some form of heating to prevent water in or on the valve from freezing.

Typically, silicone heaters are used since these can be formed as flexible sheets or sleeves and fitted around the parts of the valve that require heating.

Although silicone heaters provide an effective and simple solution, silicone has fairly low mechanical properties and so can be damaged during installation or during normal use of the valve and may need to be replaced frequently. Further, the known silicone heaters are provided as a layer around the valve/pipes. The provides very localised heating. Further, this results in an overall increase of the size of the valve/pipes and therefore requires more space for installation. In aircraft, and other applications where space is limited, this can be disadvantageous. Another valve heating arrangement disclosing the preamble of claim 1 is known from document AT 12 957 U1.

There is, therefore, a need for a simple way of providing heating to valves that avoids these problems.

### SUMMARY

According to this disclosure, there is provided a heating arrangement for a valve, comprising a valve housing body comprising a heat conductive material and which incorporates one or more infrared heater elements mounted into one or more enclosed recesses provided on or integrally formed with a valve housing body, the one or more recesses having at least one wall defined by a closure of transparent material selected to allow infrared radiation of a first wavelength range to pass therethrough but to block passage of infrared radiation of a second, different, wavelength range from passing therethrough, the arrangement further including means for providing power to the one or more infrared heating elements to emit infrared radiation across the first and second wavelength ranges.

The first wavelength range may be in the near- or short-wave infrared radiation range, and the second wavelength range may be in the mid- or long-wave infrared radiation range, and

One or more of the recesses may be provided in extensions or flanges at the corners of the housing body. One or more recesses may be provided in existing space at the top or bottom of the housing body.

Two infrared heater elements may be provided in each recess.

In one example, the housing body and heating elements and recesses are arranged as two mirrored subsystems, each having its own power supply.

Also provided is a valve assembly comprising a valve heating arrangement as defined above, an inlet port and an outlet port arranged to define a flow passage therebetween through the valve housing, and a moveable valve element located in the flow passage and movable relative to the valve housing to regulate flow through the flow passage from the inlet port to the outlet port.

### BRIEF DESCRIPTION

Examples of the valve heating arrangement of the disclosure will be described below with reference to the drawings. It should be noted that variations are possible within the scope of the claims.

The arrangement will be described with particular reference to valves used in aerospace, but the inventive concept can be equally applied to valves used in other applications where heating is required and the scope of the invention is not limited to any particular application or type of valve.
Figure 1 shows an example of a typical valve provided with a known silicone heater.
Figure 2 shows an example of a heating arrangement according to this disclosure.
Figure 3 shows a detail of an example of a heating arrangement according to the disclosure.
Figure 4 shows a part-exploded view of the example of Figure 2.
Figure 5 shows a part-exploded view of the detail of Figure 3.
Figure 6 shows an example of the heater arrangement incorporated into a valve assembly.
Figure 7 is provided to explain heat generation in an arrangement according to the disclosure.
Figure 8 is provided to further explain the heating effect in an arrangement according to the disclosure.

### DETAILED DESCRIPTION

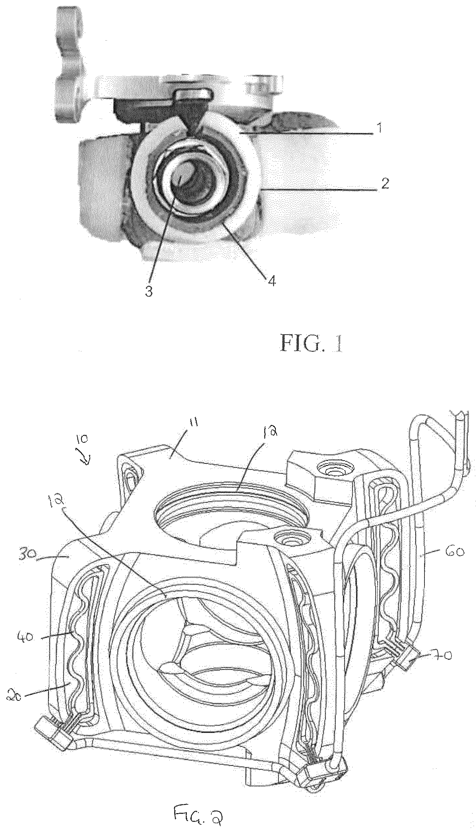

With reference to Fig. 1, a conventional valve heating arrangement will be described by way of background.

A typical valve comprises a valve body 1 having a number of ports 2 and defining a fluid flow passage 3 therethrough between the ports. The valve regulates the flow of fluid in different ways depending on the type of valve, but essentially a valve component e.g. a ball, moves relative to the valve body to open and close the fluid flow passage as required. The present invention is not limited to any particular type of valve.

In the conventional arrangement, where the valve is at risk of freezing at low temperatures, silicone heater elements 4 are wrapped around the outside of the valve parts.

As can be seen, this adds to the overall dimensions of the valve and, further, the heater elements may be vulnerable to damage. Furthermore, the heater elements provided a very limited and localised heating effect.

The heating arrangement of the present disclosure comprises a valve housing body 11 comprising a heat conductive material and which incorporates one or more infrared heater elements 40 mounted into one or more recesses 20 provided on or integrally formed with the valve housing body, the one or more recesses having at least one wall defined by a closure 50 of transparent material selected to allow infrared radiation of a first wavelength range to pass therethrough but to block passage of infrared radiation of a second, different, wavelength range from passing therethrough, the arrangement further including means 60, 70, 80 for providing power to the one or more infrared heating elements to emit infrared radiation within the first and second wavelength ranges.

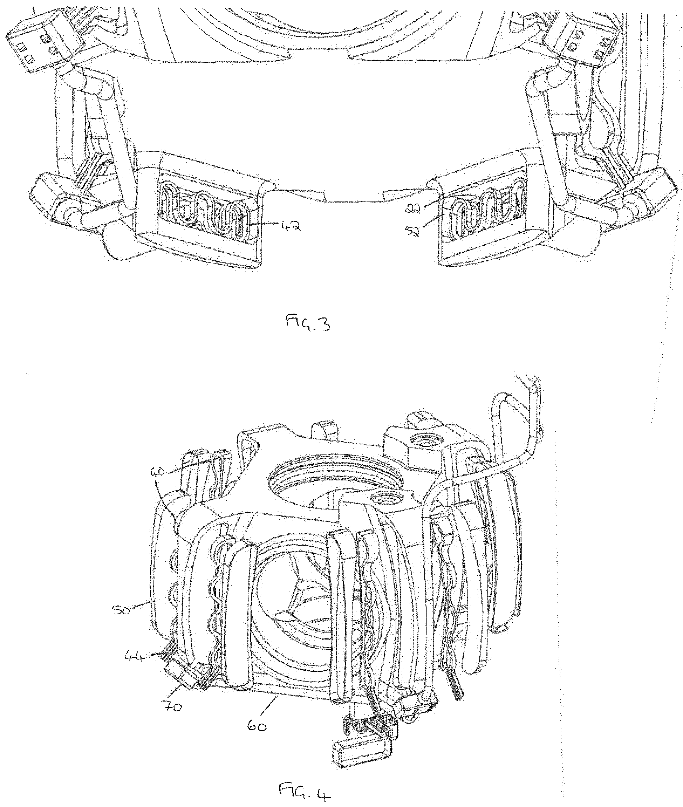

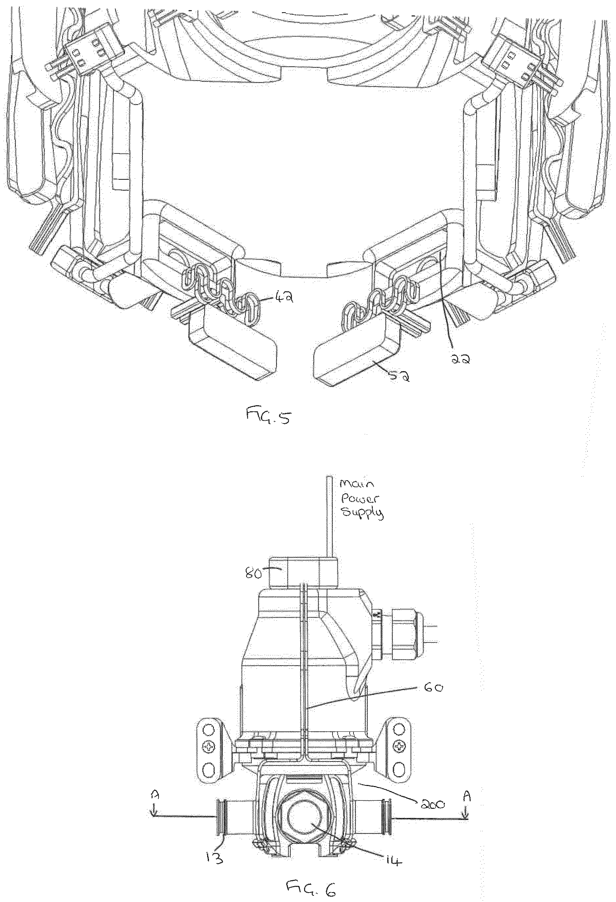

An example of the heater arrangement according to the disclosure is shown in Figs. 2 and 3. The arrangement includes a valve housing 10 having a body 11 of heat conductive material e.g. steel or other conductive metal. The valve housing 10 is configured to house a movable valve part and to be connected, at ports 12, via e.g. connectors, to fluid pipes 13 and/or plugs 14 (as can be seen in Fig. 6). The valve housing, housing the movable valve part, is arranged to be connected in a fluid system in a known manner such that the valve can allow or prevent fluid flowing through the pipes 13 to pass the valve. The example shown is a ball valve, where the movable element would be a ball, with a passage defined therethrough, arranged to rotate within the valve housing such that the passage aligns with the ports connected to pipes 13, in an open position, or the ball body blocks fluid flow through the pipes in a closed position. This is just one type of known valve arrangement. Other types of valve are known, not described here, to which the heater arrangement of this disclosure could be applied.

The valve housing 10 is provided with one or more recesses 20 to house the infrared heater elements. The recesses 20 may be provided in flanges or extensions of the valve housing, referred to herein as heating pads 30. **In** the example shown, a heating pad 30 is provided at each of four corners of the valve housing but other numbers of and locations for heating pads can also be envisaged. Further, the heating pads 30 may be provided as separate parts which are affixed to the valve housing or may be manufactured integrally with the valve housing e.g. by additive manufacturing/3D printing processes.

One or more electric infrared heaters 40 is located in each recess 20. **In** the example shown, each recess has two heaters so as to emit radiation from two sides of the recess. A single heater, or more than two heaters could also be provided.

The recess 20 is formed as a closed space housing the heater(s), with at least one wall portion formed of a transparent, heat-resistive material 50 such as glass or some other material that absorbs some infrared radiation e.g. mid-wave or long-wave infrared radiation, but allows other infrared radiation e.g. near or short-wave infrared radiation to pass therethrough. Polycarbonates are a group of thermoplastic materials that also have these properties. **In** the example shown, the recesses are defined by two opposing walls of such transparent material.

The heaters are arranged such that power can be provided to them from outside the recess, to cause the heater to emit radiation. This can be by means of power cables 60 which may be connected, in use, to a battery 80 and/or other power supply e.g. a mains supply, and are connected by e.g. connectors 70 to the infrared heaters 40. The heaters 40,42 may be provided e.g. with pins 44 for electrical connection with the connectors 70. Other known types of electrical connection to a power supply are also possible. For reliability, the power supply to the heaters should be uninterrupted. In one example, therefore, the valve heating arrangement is provided with its own power source (e.g. battery 80) which can switch in to provide power if a main power supply is interrupted, to ensure uninterrupted power supply to the heaters. For additional reliability, the arrangement may be divided into two mirrored sub-systems 100, 200 (best seen in Fig. 6) each having its own power supply. In such an example, each subsystem may be designed such that one can provide sufficient heat in the event that the other is off.

In the example shown, heaters 40 are provided along the sides of the valve housing. In addition, or instead, heaters 42 could be provided in recesses 22 formed at the bottom of the valve housing (as seen in Fig. 3) and/or at the top of the valve housing, where space is typically available in the valve arrangement. Again, the recesses 22 should be provided with a transparent 'window' or cover 52 similar to the cover 50 described above.

The various components of the above-described example can be more clearly seen in the exploded views of Figs. 4 and 5.

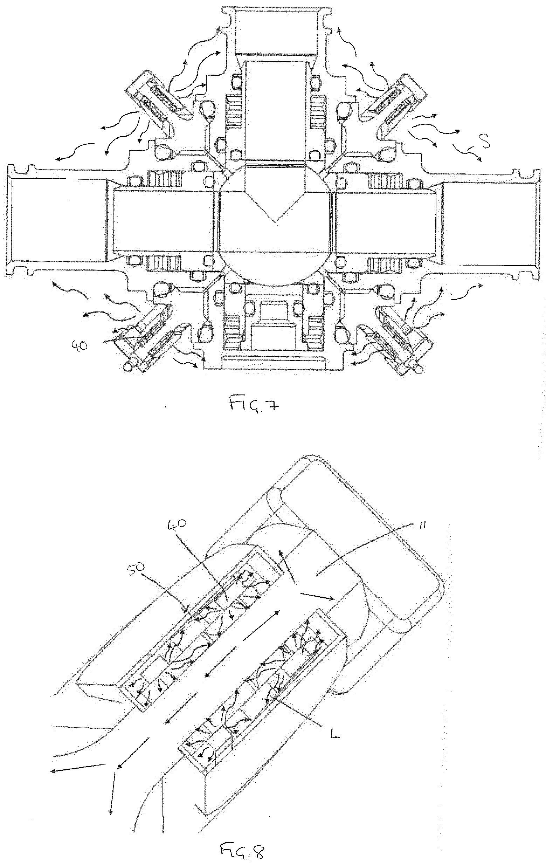

The heating operation of the arrangement of the disclosure will now be further described with reference to Figs. 7 and 8.

Fig. 7 shows the arrangement through cross-section A-A of Fig. 6. The heaters 40 emit infrared radiation, when powered on, and radiation of the first wavelength range (near infrared/short-wave infrared) will pass through the transparent cover 50 and radiate around the exterior of the valve housing as indicated by the wavy arrows S. This radiation will warm objects into which it comes into contact, including the valve body 11, connectors 13 and plugs 14 connected to the valve. The infrared heaters in the enclosed recesses will also deliver heat to their surrounding and so will heat the inside of the recess and the transparent cover 50, using the principle of Joule heating or resistive heating. The heating arrangement provides three different heating effects. The radiation passing through the cover (arrows S shown in Fig. 7) will vary in amount depending on the cover material. Infrared radiation in the second range (mid/long-wave infrared) will be absorbed by the transparent material which itself becomes a source of heat which is conducted by it to provide conductive heating around the transparent material. Further, the heat generated by the heater in the recesses (arrows L in Fig. 8) will heat the material of the adjacent housing parts. As the housing is made of a heat conductive material, as it is heated by the radiation, the heat will be conducted throughout the housing and window material by conduction. Thus, heat is transferred to other areas that are not directly affected by infrared radiation (A and B). The combination of these heating effects means that the housing parts are heated and, also, a heating 'zone' is created around the housing parts, at least in the region of the heaters.

Because heat is generated using infrared heaters, which use less energy that other types of heaters, the heating arrangement is very energy efficient which makes it particularly advantageous in aircraft and the like where energy consumption must be minimised. Furthermore, the infrared heaters directly heat component parts and so energy is not wasted by heating surrounding air, and yet a warm zone can still be generated around the valve housing. Further, because radiant heat does not require a medium in which it propagates, it is an ideal solution for areas where there is no climate control and/or low air density such as at high altitudes.

Because the heating arrangement provides a heat zone, the heaters can be strategically placed to heat those parts of the system that are vulnerable to freezing - e.g. those subject to contact with water. Further, because the heaters are in enclosed recesses, they are less vulnerable to damage.

The heating arrangement is simple and inexpensive to manufacture and is easily scalable to different applications.

**In** recent times, additive manufacturing (or 3D printing) processes have been developed and improved to an extent that more and more components can be made in this way. Using additive manufacturing enables more flexibility in the sizes and more complexity in the shapes of components that can be manufactured. Desired shapes and sizes can be manufactured quickly and on an 'as needed' basis thus also reducing storage requirements. Additive manufacturing is now becoming a more common way of manufacturing valve bodies and valve parts. The solution provided here can take advantage of this development.

## Claims

1. A valve heating arrangement comprising a valve housing body (11) comprising a heat conductive material and which incorporates one or more infrared heater elements (40) mounted into one or more enclosed recesses (20,22) provided on or integrally formed with the valve housing body, the one or more recesses having at least one wall defined by a closure (50) of transparent material selected to allow infrared radiation of a first wavelength range to pass therethrough but to block passage of infrared radiation of a second, different, wavelength range from passing therethrough, **characterized in that** the arrangement further includes means (60, 70, 80) for providing power to the one or more infrared heater elements to emit infrared radiation across the first and second wavelength ranges.

2. The arrangement of claim 1, wherein the first wavelength range is in the near- or short-wave infrared radiation range.

3. The arrangement of claim 1 or 2, wherein the second wavelength range is in the mid- or long-wave infrared radiation range.

4. The arrangement of any preceding claim, wherein one or more of the recesses (20) are provided in extensions or flanges (30) of the housing body (11).

5. The arrangement of claim 4, wherein the valve housing body is substantially cuboid and the extensions or flanges are provided at each corner of the cube.

6. The arrangement of claim 4 or 5 wherein the extensions or flanges are attached to the housing body.

7. The arrangement of claim 4 or 5, wherein the extensions or flanges are formed integrally with the valve housing body (11).

8. The arrangement of any preceding claim, having two infrared heater elements (40) provided in each recess (20).

9. The arrangement of any preceding claim, wherein the transparent material is glass.

10. The arrangement of any preceding claim, wherein the means for providing power comprises a battery (80) and/or a main power supply.

11. The arrangement of any preceding claim, wherein the housing body and heating elements and recesses are arranged as two mirrored subsystems, each having its own power supply.

12. The arrangement of any preceding claim, wherein one or more of the recesses (22) are formed at a top or a bottom of the valve housing (11).

13. The arrangement of any preceding claim, the valve body housing and the recesses formed by additive manufacturing.

14. A valve assembly comprising a valve heating arrangement as claimed in any preceding claim, an inlet port and an outlet port arranged to define a flow passage therebetween through the valve housing, and a moveable valve element located in the flow passage and movable relative to the valve housing to regulate flow through the flow passage from the inlet port to the outlet port.

## Patentansprüche

1. Eine Ventilheizanordnung, umfassend ein Ventilgehäuse (11), das ein wärmeleitfähiges Material umfasst und in das ein oder mehrere Infrarot-Heizelemente (40) eingebaut sind, die in einer oder mehreren umschlossenen Aussparungen (20, 22) montiert sind, welche an dem Ventilgehäuse vorgesehen oder integral mit diesem ausgebildet sind, wobei die eine oder mehreren Aussparungen mindestens eine Wandung aufweisen, die durch einen Verschluss (50) aus einem transparenten Material definiert ist, das so ausgewählt ist, dass es den Durchtritt von Infrarotstrahlung eines ersten Wellenlängenbereichs zulässt, jedoch den Durchtritt von Infrarotstrahlung eines zweiten, davon verschiedenen Wellenlängenbereichs blockiert, **dadurch gekennzeichnet, dass** die Anordnung ferner Mittel (60, 70, 80) umfasst, um das eine oder die mehreren Infrarot-Heizelemente mit Energie zu versorgen, damit diese Infrarotstrahlung über den ersten und den zweiten Wellenlängenbereich hinweg emittieren.

2. Die Anordnung nach Anspruch 1, wobei der erste Wellenlängenbereich im Bereich der Nah- oder Kurzwellen-Infrarotstrahlung liegt.

3. Die Anordnung nach Anspruch 1 oder 2, wobei der zweite Wellenlängenbereich im Bereich der Mittel- oder Langwellen-Infrarotstrahlung liegt.

4. Die Anordnung nach einem der vorhergehenden Ansprüche, wobei eine oder mehrere der Aussparungen (20) in Verlängerungen oder Flanschen (30) des Gehäuses (11) vorgesehen sind.

5. Die Anordnung nach Anspruch 4, wobei das Ventilgehäuse im Wesentlichen quaderförmig ist und die Verlängerungen oder Flansche an jeder Ecke des Würfels vorgesehen sind.

6. Die Anordnung nach Anspruch 4 oder 5, wobei die Verlängerungen oder Flansche am Gehäuse angebracht sind.

7. Die Anordnung nach Anspruch 4 oder 5, wobei die Verlängerungen oder Flansche integral mit dem Ventilgehäuse (11) ausgebildet sind.

8. Die Anordnung nach einem der vorhergehenden Ansprüche, mit zwei in jeder Aussparung (20) vorgesehenen Infrarot-Heizelementen (40).

9. Die Anordnung nach einem der vorhergehenden Ansprüche, wobei das transparente Material Glas ist.

10. Die Anordnung nach einem der vorhergehenden Ansprüche, wobei die Mittel zur Energieversorgung eine Batterie (80) und/oder eine Netzstromversorgung umfassen.

11. Die Anordnung nach einem der vorhergehenden Ansprüche, wobei das Gehäuse sowie die Heizelemente und Aussparungen als zwei gespiegelte Teilsysteme angeordnet sind, von denen jedes seine eigene Energieversorgung aufweist.

12. Die Anordnung nach einem der vorhergehenden Ansprüche, wobei eine oder mehrere der Aussparungen (22) an einer Ober- oder Unterseite des Ventilgehäuses (11) ausgebildet sind.

13. Die Anordnung nach einem der vorhergehenden Ansprüche, wobei das Ventilgehäuse und die Aussparungen durch additive Fertigung gebildet sind.

14. Eine Ventilanordnung, umfassend eine Ventilheizanordnung nach einem der vorhergehenden Ansprüche, einen Einlassanschluss und einen Auslassanschluss, die so angeordnet sind, dass sie einen dazwischen liegenden Strömungsweg durch das Ventilgehäuse definieren, sowie ein bewegliches Ventilelement, das in dem Strömungsweg angeordnet und relativ zu dem Ventilgehäuse beweglich ist, um den Durchfluss durch den Strömungsweg vom Einlassanschluss zum Auslassanschluss zu regulieren.

## Revendications

1. Un agencement de chauffage de vanne comprenant un corps de boîtier de vanne (11) comprenant un matériau thermoconducteur et qui incorpore un ou plusieurs éléments chauffants infrarouges (40) montés dans un ou plusieurs évidements fermés (20, 22) prévus sur le corps de boîtier de vanne ou formés d'une seule pièce avec celui-ci, le ou les évidements présentant au moins une paroi définie par une fermeture (50) en matériau transparent sélectionné pour permettre le passage du rayonnement infrarouge d'une première plage de longueurs d'onde à travers celle-ci mais pour bloquer le passage du rayonnement infrarouge d'une seconde plage de longueurs d'onde, différente, à travers celle-ci, **caractérisé en ce que** l'agencement comprend en outre des moyens (60, 70, 80) destinés à fournir de l'énergie au ou aux éléments chauffants infrarouges pour émettre un rayonnement infrarouge couvrant les première et seconde plages de longueurs d'onde.

2. L'agencement de la revendication 1, dans lequel la première plage de longueurs d'onde se situe dans la plage du rayonnement infrarouge proche ou à onde courte.

3. L'agencement de la revendication 1 ou 2, dans lequel la seconde plage de longueurs d'onde se situe dans la plage du rayonnement infrarouge moyen ou à onde longue.

4. L'agencement de l'une quelconque des revendications précédentes, dans lequel un ou plusieurs des évidements (20) sont prévus dans des extensions ou des brides (30) du corps de boîtier (11).

5. L'agencement de la revendication 4, dans lequel le corps de boîtier de vanne est substantiellement cuboïde et les extensions ou brides sont prévues à chaque coin du cube.

6. L'agencement de la revendication 4 ou 5, dans lequel les extensions ou brides sont fixées au corps de boîtier.

7. L'agencement de la revendication 4 ou 5, dans lequel les extensions ou brides sont formées d'une seule pièce avec le corps de boîtier de vanne (11).

8. L'agencement de l'une quelconque des revendications précédentes, comportant deux éléments chauffants infrarouges (40) prévus dans chaque évidement (20).

9. L'agencement de l'une quelconque des revendications précédentes, dans lequel le matériau transparent est du verre.

10. L'agencement de l'une quelconque des revendications précédentes, dans lequel les moyens destinés à fournir de l'énergie comprennent une batterie (80) et/ou une alimentation électrique principale.

11. L'agencement de l'une quelconque des revendications précédentes, dans lequel le corps de boîtier et les éléments chauffants et les évidements sont agencés sous la forme de deux sous-systèmes en miroir, chacun ayant sa propre alimentation électrique.

12. L'agencement de l'une quelconque des revendications précédentes, dans lequel un ou plusieurs des évidements (22) sont formés en haut ou en bas du boîtier de vanne (11).

13. L'agencement de l'une quelconque des revendications précédentes, le corps de boîtier de vanne et les évidements étant formés par fabrication additive.

14. Un ensemble de vanne comprenant un agencement de chauffage de vanne tel que revendiqué dans l'une quelconque des revendications précédentes, un orifice d'entrée et un orifice de sortie agencés pour définir un passage d'écoulement entre eux à travers le corps de boîtier de vanne, et un élément de vanne mobile situé dans le passage d'écoulement et mobile par rapport au corps de boîtier de vanne pour réguler l'écoulement à travers le passage d'écoulement depuis l'orifice d'entrée vers l'orifice de sortie.
